# DEMANDE DE BREVET EUROPEEN

(11) **EP 2 242 034 A1**
(43) Date de publication de la demande: **20.10.2010**
(21) Numéro de dépôt: 09290282.4
(22) Date de dépôt: 16.04.2009
(51) Int. Cl.: G09F 11/00, H04M 1/56, H04M 1/57, H04M 1/02

(54) **Appareil électronique portable**

(71) Demandeur: CELSIUS X VI II, 75011 Paris (FR)
(72) Inventeur: André, Romaric, 75009 Paris (FR); Pruvot, Thomas, 75019 Paris (FR)
(74) Mandataire: Micheli & Cie SA

(57) **Abrégé**

Un appareil électronique portable, en particulier un téléphone portable, comprenant une partie électronique et un dispositif d'affichage mécanique (5,6) commandé par la partie électronique, est caractérisé en ce que le dispositif d'affichage mécanique (5,6) comprend au moins une référence fixe (6), tel qu'un guichet, et au moins un organe mobile (5) portant des caractères, chacun de ces caractères pouvant être affiché par un déplacement de l'organe mobile (5) amenant le caractère en regard de la référence fixe (6). Ce dispositif d'affichage mécanique (5,6) permet notamment d'afficher mécaniquement, et donc de manière persistante, le nom ou le numéro de téléphone d'un appelant.

## Description

La présente invention concerne un appareil électronique portable, en particulier un téléphone portable, comprenant, en plus d'un afficheur électrique digital traditionnel (LCD, OLED, TFT, etc.), un afficheur électromécanique. L'intérêt d'un tel afficheur électromécanique est que, s'il dépend d'une alimentation électrique pour son fonctionnement, il n'est tributaire d'aucune alimentation pour son affichage qui peut être qualifié de « persistant » puisque consultable même dans le cas où l'appareil électronique est éteint ou sa batterie est déchargée.

Il a été proposé dans le document EP 1 388 778 un téléphone portable doté d'une horloge électromécanique dont les aiguilles des heures et des minutes peuvent être utilisées pour afficher le nombre de messages reçus, le niveau de charge de la batterie ou le niveau de sensibilité au réseau. Ce téléphone portable présente l'inconvénient de nécessiter la présence d'une horloge électromécanique. Un autre inconvénient est que les types de données qui peuvent être affichées mécaniquement par ce téléphone sont limités.

La présente invention vise à remédier à ces inconvénients et propose à cette fin un appareil électronique portable comprenant une partie électronique et un dispositif d'affichage mécanique commandé par la partie électronique, **caractérisé en ce que** le dispositif d'affichage mécanique comprend au moins une référence fixe et au moins un organe mobile portant des caractères, chacun de ces caractères pouvant être affiché par un déplacement de l'organe mobile amenant le caractère en regard de la référence fixe.

De préférence, la référence fixe est un guichet à travers lequel le caractère affiché est visible.

Les caractères comprennent typiquement des chiffres et/ou des lettres.

L'organe mobile est par exemple un disque, un cylindre ou une courroie et peut être entraîné par un moteur électrique commandé par la partie électronique.

Dans un mode de réalisation avantageux, le dispositif d'affichage mécanique comprend plusieurs organes mobiles et est commandé par la partie électronique pour afficher une combinaison de caractères portés respectivement par les organes mobiles.

Selon une application particulière de l'invention, l'appareil électronique portable est un téléphone portable.

Dans cette application, le dispositif d'affichage mécanique peut avantageusement être commandé par la partie électronique pour afficher une information d'identification d'un appelant, telle que son nom et/ou son numéro de téléphone. Cette information d'identification peut être affichée au moment de l'arrivée d'un appel entrant ou pendant cet appel, systématiquement ou seulement si le niveau de charge de la batterie du téléphone est inférieur à un niveau prédéterminé. Comme l'affichage est mécanique, l'information reste affichée en cas d'extinction du téléphone due à une coupure d'alimentation (batterie déchargée), ce qui permet à l'utilisateur de recontacter l'appelant à l'aide d'un autre appareil de communication.

Le dispositif d'affichage mécanique peut aussi être commandé par la partie électronique pour afficher l'une au moins des informations suivantes : niveau de charge de la batterie du téléphone, niveau de sensibilité au réseau, nombre de messages (vocaux et/ou écrits) reçus, nombre de messages (vocaux et/ou écrits) non lus, nombre d'appels en absence, nombre de contacts enregistrés, information (nom, numéro de téléphone, date de naissance, digicode, etc.) sur les contacts enregistrés.

La présente invention est applicable à tous types de téléphones portables, qu'ils soient monoblocs, en deux parties articulées rabattables l'une sur l'autre (« téléphones à clapet ») ou en deux parties coulissantes l'une par rapport à l'autre.

D'autres caractéristiques et avantages de la présente invention apparaîtront à la lecture de la description détaillée suivante faite en référence aux dessins annexés dans lesquels :
- la figure 1 est une vue de face d'un téléphone portable selon un premier mode de réalisation de l'invention ;
- la figure 2 est une vue de face du téléphone portable selon le premier mode de réalisation dans laquelle une plaque comportant des guichets a été retirée pour rendre visible une partie interne d'un dispositif d'affichage mécanique ;
- la figure 3 est une vue de face d'un téléphone portable selon un deuxième mode de réalisation de l'invention ;
- la figure 4 est une vue en perspective du téléphone portable selon le deuxième mode de réalisation dans laquelle une plaque comportant un guichet a été retirée pour rendre visible une partie interne d'un dispositif d'affichage mécanique ;
- la figure 5 est une vue en coupe transversale du téléphone portable selon le deuxième mode de réalisation, prise selon la ligne V-V de la figure 3 ;
- la figure 6 est une vue en perspective d'un téléphone portable selon un troisième mode de réalisation de l'invention ;
- la figure 7 est une vue en perspective du téléphone portable selon le troisième mode de réalisation de l'invention, dans laquelle une plaque comportant un guichet a été retirée pour rendre visible une partie interne d'un dispositif d'affichage mécanique ; et
- la figure 8 est un bloc-diagramme montrant une partie électronique de commande du dispositif d'affichage mécanique du téléphone portable selon l'invention.

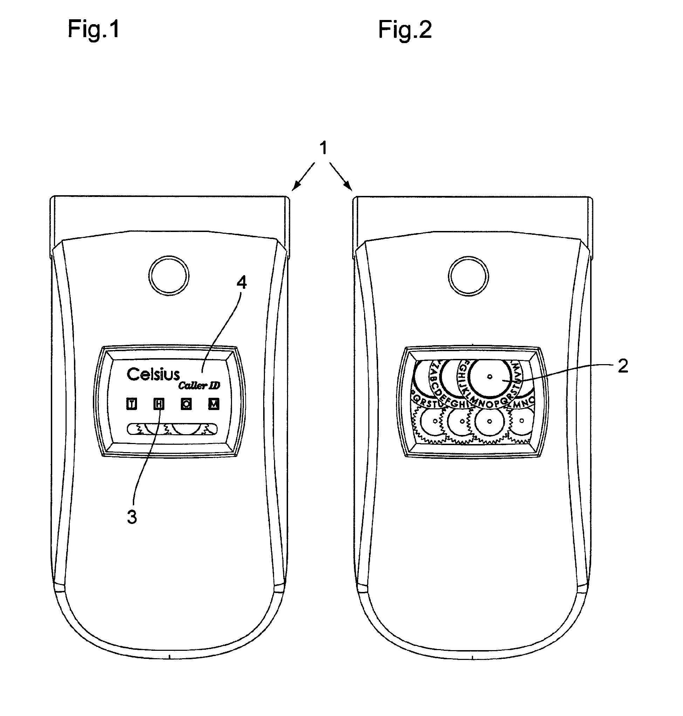

   Les figures 1 et 2 représentent un téléphone mobile 1 comprenant un dispositif d'affichage mécanique utilisant plusieurs disques pivotants 2. Dans l'exemple illustré, le téléphone 1 est à clapet et le dispositif d'affichage se trouve au dos du clapet, c'est-à-dire de la partie qui comprend l'afficheur digital traditionnel du téléphone. L'ensemble des caractères de l'alphabet est inscrit sur la périphérie de chaque disque 2. Lors d'un appel entrant, les disques 2 pivotent de telle manière que les premières lettres du nom de l'appelant apparaissent à travers plusieurs guichets respectifs 3 constitués par des ouvertures pratiquées dans une plaque de protection 4 fixée à la coque du téléphone. Les disques 2 sont chacun entraînés en rotation par le biais d'un moteur électrique de type pas à pas (non représenté) commandé par l'électronique du téléphone.

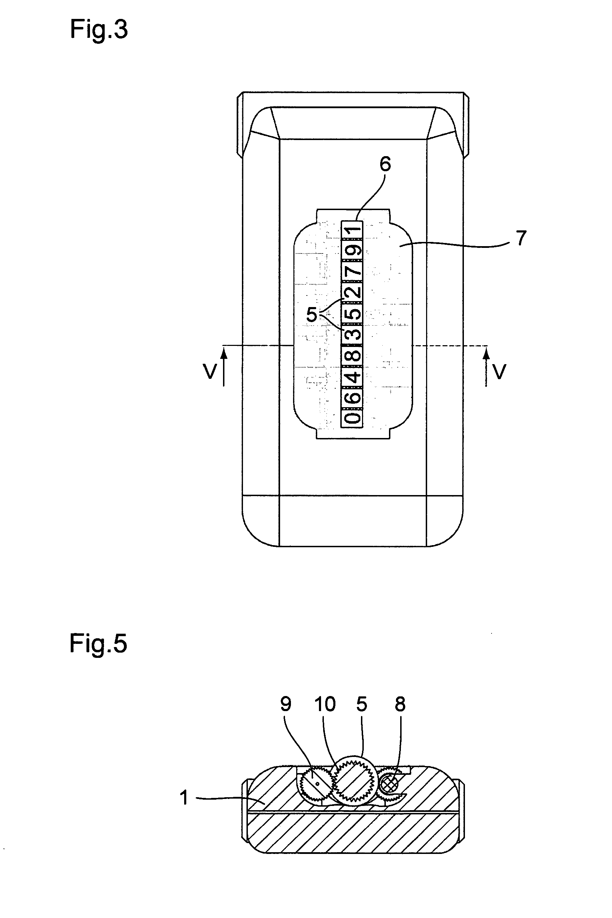

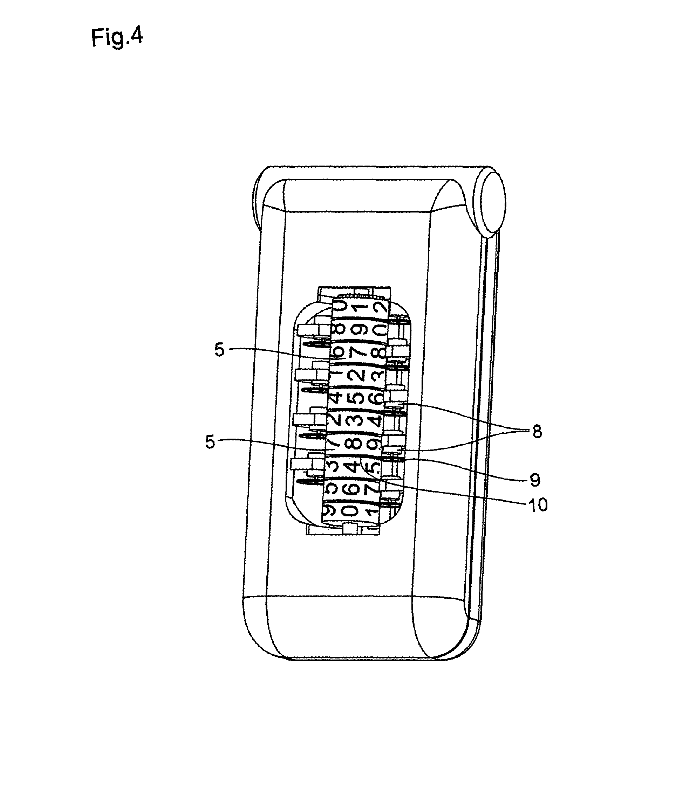

   Les figures 3 à 5 représentent un deuxième mode de réalisation d'un téléphone portable à affichage mécanique, où les disques sont remplacés par des cylindres rotatifs coaxiaux 5 sur chacun desquels les chiffres de 0 à 9 sont inscrits. Lors d'un appel entrant, les cylindres 5 pivotent de telle manière que le numéro de téléphone de l'appelant apparaisse à travers un guichet commun 6 sous la forme d'un alignement de chiffres portés respectivement par les cylindres 5. Le guichet 6 est ici constitué par une ouverture pratiquée dans une plaque de protection 7 fixée à la coque du téléphone. La plaque 7 peut être partiellement transparente pour rendre visible le mécanisme de commande des cylindres 5 tout en permettant une distinction claire entre l'alignement des chiffres central correspondant au numéro de téléphone affiché et les autres alignements de chiffres. Dans une variante, le guichet 6 pourrait être constitué par une partie transparente de la plaque 7. Chaque cylindre 5 est entraîné par un moteur pas à pas 8 via un train d'engrenages 9 et 10.

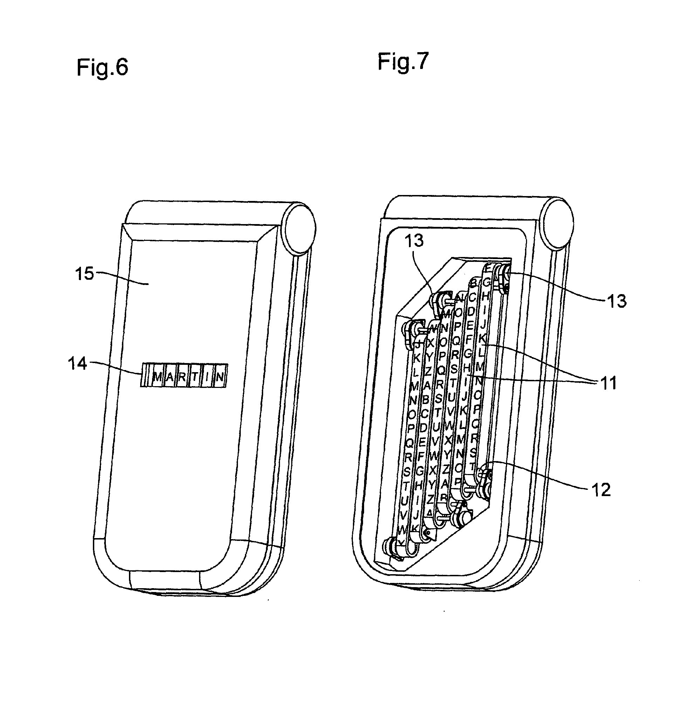

   Les figures 6 et 7 représentent un troisième mode de réalisation de téléphone portable à affichage mécanique. L'affichage du nom de l'appelant (ou de toute autre information) est réalisé à l'aide de courroies 11 coopérant avec des poulies 12 et sur lesquelles sont inscrites les lettres de l'alphabet. Ces courroies 11, qui présentent l'avantage de pouvoir porter un plus grand nombre de caractères qu'un disque ou un cylindre, sont soit des courroies crantées, soit des courroies lisses. Chaque courroie 11 est entraînée par un moteur électrique pas à pas respectif 13 lié à l'une des deux poulies 12 correspondantes. Les courroies 11 peuvent ainsi être déplacées pour faire apparaître un alignement de lettres souhaité à travers un guichet 14 constitué par une ouverture pratiquée dans un capot 15. Le capot 15 peut être transparent ou semi transparent afin de permettre à l'utilisateur de voir le mécanisme de commande des courroies 11.

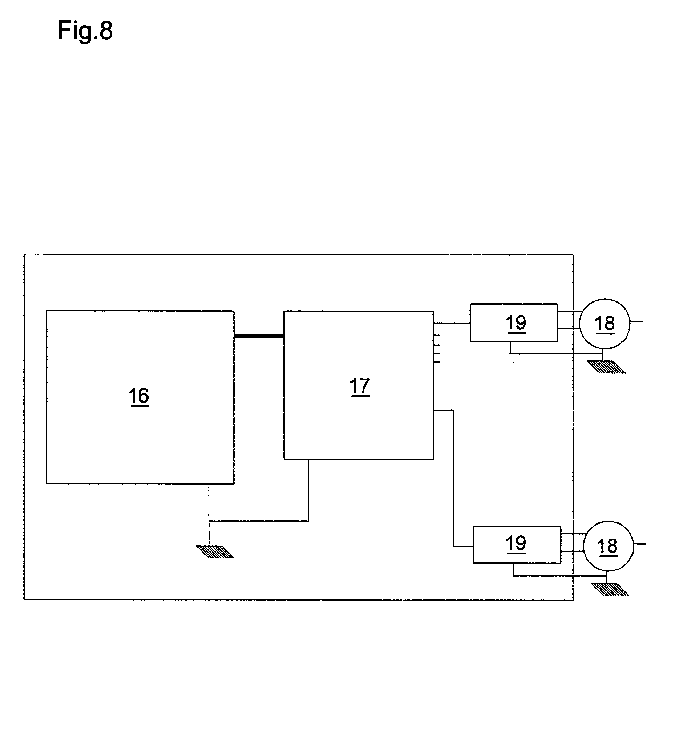

   La figure 8 représente le schéma de fonctionnement de l'électronique de commande de l'affichage, qu'il soit à disques, à cylindres ou à courroies. Lors d'un appel entrant, le processeur principal 16 du téléphone communique à un microcontrôleur 17 typiquement via une liaison série (pouvant être de différents types comme une liaison 12C, UART ou SPI) le nom ou le numéro de l'appelant. Le processeur 16 envoie les N premiers caractères du nom ou du numéro de téléphone au microcontrôleur 17, le nombre N correspondant au nombre de caractères qu'il est possible d'afficher, c'est-à-dire au nombre d'organes d'affichage mobiles (disques, cylindres ou courroies). A chaque caractère correspond une sortie du microcontrôleur 17 qui commande chaque moteur pas à pas 18 via une chaîne d'amplification 19 constituée d'amplificateur(s) opérationnel(s) ou de transistors. Ce moteur 18 commande alors le déplacement de l'organe d'affichage mobile correspondant.

En variante, afin de limiter la consommation d'énergie du téléphone, l'affichage mécanique du nom ou du numéro de l'appelant ne se fait pas lors de chaque appel entrant, mais seulement lorsque le processeur principal 16 est informé d'un niveau de charge de batterie inférieur à un niveau prédéterminé. L'affichage mécanique peut être activé par le processeur 16 même en cours d'appel. Si le niveau de charge de la batterie devient trop faible durant un appel, le processeur 16 sauvegarde mécaniquement le numéro de l'appelant en le faisant afficher par le dispositif d'affichage mécanique. Ainsi, une fois la batterie totalement déchargée, le numéro sera toujours accessible à l'utilisateur afin qu'il puisse rappeler son correspondant avec un autre appareil. On peut prévoir que le mode d'activation de l'affichage mécanique (activation à l'arrivée de chaque appel ou seulement en cas de charge de batterie faible) soit sélectionnable par l'utilisateur via un menu affiché par l'afficheur électrique digital du téléphone.

## Revendications

1. Appareil électronique portable comprenant une partie électronique (16-19) et un dispositif d'affichage mécanique (2, 3 ; 5, 6 ; 11, 14) commandé par la partie électronique, **caractérisé en ce que** le dispositif d'affichage mécanique comprend au moins une référence fixe (3 ; 6 ; 14) et au moins un organe mobile (2 ; 5 ; 11) portant des caractères, chacun de ces caractères pouvant être affiché par un déplacement de l'organe mobile amenant le caractère en regard de la référence fixe.

2. Appareil selon la revendication 1, **caractérisé en ce que** la référence fixe (3 ; 6 ; 14) est un guichet à travers lequel le caractère affiché est visible.

3. Appareil selon la revendication 1 ou 2, **caractérisé en ce que** les caractères comprennent des chiffres et/ou des lettres.

4. Appareil selon l'une quelconque des revendications 1 à 3, **caractérisé en ce que** l'organe mobile est un disque (2), un cylindre (5) ou une courroie (11).

5. Appareil selon l'une quelconque des revendications 1 à 4, **caractérisé en ce que** l'organe mobile (2 ; 5 ; 11) est entraîné par un moteur électrique (8 ; 13) commandé par la partie électronique (16-19).

6. Appareil selon l'une quelconque des revendications 1 à 5, **caractérisé en ce que** le dispositif d'affichage mécanique comprend plusieurs organes mobiles (2 ; 5 ; 11) et est commandé par la partie électronique (16-19) pour afficher une combinaison de caractères portés respectivement par les organes mobiles.

7. Téléphone portable constitué par un appareil selon l'une quelconque des revendications 1 à 6.

8. Téléphone portable selon la revendication 7, **caractérisé en ce que** le dispositif d'affichage mécanique (2, 3 ; 5, 6 ; 11, 14) est commandé par la partie électronique (16-19) pour afficher une information d'identification d'un appelant.

9. Téléphone portable selon la revendication 8, **caractérisé en ce que** l'information d'identification de l'appelant est son nom et/ou son numéro de téléphone.

10. Téléphone portable selon la revendication 8 ou 9, **caractérisé en ce que** le dispositif d'affichage mécanique (2, 3 ; 5, 6 ; 11, 14) est commandé par la partie électronique (16-19) pour afficher ladite information d'identification de l'appelant seulement lorsque le niveau de charge de la batterie du téléphone est inférieur à un niveau prédéterminé.

11. Téléphone portable selon l'une quelconque des revendications 7 à 10, **caractérisé en ce que** le dispositif d'affichage mécanique (2, 3 ; 5, 6 ; 11, 14) est commandé par la partie électronique (16-19) pour afficher l'une au moins des informations suivantes : niveau de charge de la batterie du téléphone, niveau de sensibilité au réseau, nombre de messages reçus, nombre de messages non lus, nombre d'appels en absence, nombre de contacts enregistrés, information sur les contacts enregistrés.
